# FASCICULE DE BREVET EUROPEEN

(11) **EP 3 362 325 B1**
(45) Date de publication et mention de la délivrance du brevet: **02.10.2019**
(21) Numéro de dépôt: 16794695.3
(22) Date de dépôt: 11.10.2016
(51) Int. Cl.: B60R 21/34, B60K 11/08

(54) **MODULE DE FACE AVANT POUR VEHICULE AUTOMOBILE**
FRONTMODUL FÜR EIN KRAFTFAHRZEUG
FRONT PANEL MODULE FOR A MOTOR VEHICLE

(30) Priorité: 15.10.2015 FR 1559807
(43) Date de publication de la demande: 22.08.2018
(73) Titulaire: Valeo Systemes Thermiques, 78322 Le Mesnil Saint-Denis (FR)
(72) Inventeur: VACCA, Frédéric, 78910 Behoust (FR); MITIDIERI, Enzo, 78260 Achères (FR)
(74) Mandataire: Tran, Chi-Hai
(86) Numéro de dépôt international: PCT/FR2016/052622
(87) Numéro de publication internationale: WO 2017/064408

(56) Documents cités:
- WO-A1-2015/001073
- WO-A2-2012/012535
- DE-A1- 3 916 907
- FR-A1- 2 945 777
- US-A- 5 205 484
- US-A1- 2012 132 474
- US-A1- 2012 247 018
- US-A1- 2015 047 811

## Description

L'invention a notamment pour objet un dispositif de contrôle d'entrée d'air pour un module de face avant pour véhicule automobile. Un tel dispositif est parfois désigné par l'acronyme AGS, provenant de l'expression de langue anglaise "Active Grille Shutter" (obturateur actif de calandre). Le dispositif permet d'ouvrir ou de fermer l'accès de l'air à un compartiment moteur *via* un ensemble de volets agencé sur la face avant du véhicule automobile. En position ouverte, l'air peut circuler à travers l'entrée d'air, et participer au refroidissement du moteur du véhicule automobile. En position fermée, l'air ne pénètre pas *via* la calandre, ou le bouclier de la face avant, ce qui réduit le coefficient de trainée et permet ainsi de réduire la consommation de carburant et l'émission de CO₂. Le dispositif AGS permet donc de réduire la consommation d'énergie et la pollution lorsque le moteur n'a pas besoin d'être refroidi par l'air extérieur.

Un module de face avant, ou structure de face avant, pour véhicule automobile comprend un support de face avant (plus connu sous le terme anglais bolster) qui comprend généralement une traverse supérieure solidaire d'une traverse inférieure par l'intermédiaire de deux jambes disposées verticalement dans le véhicule automobile.

De manière connue, un tel module pour face avant peut s'étendre dans le véhicule automobile d'un bouclier jusqu'à un tablier du véhicule et permettre de solidariser un compartiment moteur, de supporter un groupe motoventilateur tout en constituant une séparation de l'habitacle du véhicule.

Il est utile, lors de la conception d'un véhicule automobile, de veiller à réduire au maximum les conséquences d'un accident au cours duquel le véhicule automobile percuterait un obstacle. Il convient notamment de réduire les risques de dommages corporels (en particulier lorsqu'un piéton est renversé par le véhicule automobile) mais aussi de réduire les dommages matériels au véhicule automobile lui-même.

Un dispositif AGS comprend de manière conventionnelle un actionneur (également dénommé actuateur) commandant les volets permettant l'ouverture ou la fermeture de l'entrée d'air. Les volets et le cadre du dispositif AGS supportant ces volets sont habituellement réalisés en plastique. Ce matériau présente l'avantage d'être léger et bon marché. De plus, en cas de choc, le plastique se déforme ou se brise facilement, amortissant le choc et réduisant le risque de dommages majeurs. En revanche, l'actionneur est un dispositif relativement onéreux, qui est de surcroît très dense. En cas de choc, l'actionneur est souvent endommagé ce qui entraîne des coûts de réparation importants. Par ailleurs, en cas de choc avec un piéton, l'actionneur est susceptible de causer des blessures plus graves que celles qui peuvent être occasionnées par les seuls volets du dispositif AGS. Le document US 2012/0132474 A1 révèle un module selon le préambule de la revendication 1.

Le but de l'invention est de remédier au moins partiellement à ces inconvénients.

L'invention se rapporte notamment à un module de face avant pour véhicule automobile selon revendication 1.

Un tel dispositif est doublement avantageux. Il permet d'une part de minimiser les dommages aux tiers, et d'autre part de minimiser les dommages au dispositif de contrôle d'entrée d'air et en particulier à l'actionneur, en fixant l'actionneur dans une zone protégée. Cette zone peut être éloignée des volets du dispositif, situés à l'avant du véhicule, souvent impactés en premier en cas d'accident.

D'autres modes de réalisation du dispositif de contrôle d'entrée d'air proposent que :
- la liaison flexible comprend un câble ;
- la liaison flexible comprend une tringle.

D'autres caractéristiques et avantages de l'invention apparaîtront à la lecture de la description qui va suivre. Celle-ci est purement illustrative et doit être lue en regard des dessins annexés sur lesquels :
- les figures 1 à 3 illustrent des dispositifs AGS selon l'état de l'art ;
- la figure 4 illustre un dispositif AGS et un module de face avant pour véhicule automobile selon un mode de réalisation possible de l'invention ;
- la figure 5 illustre un dispositif AGS et un module de face avant pour véhicule automobile selon un autre mode de réalisation possible de l'invention.

Sur ces figures, les éléments sensiblement identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

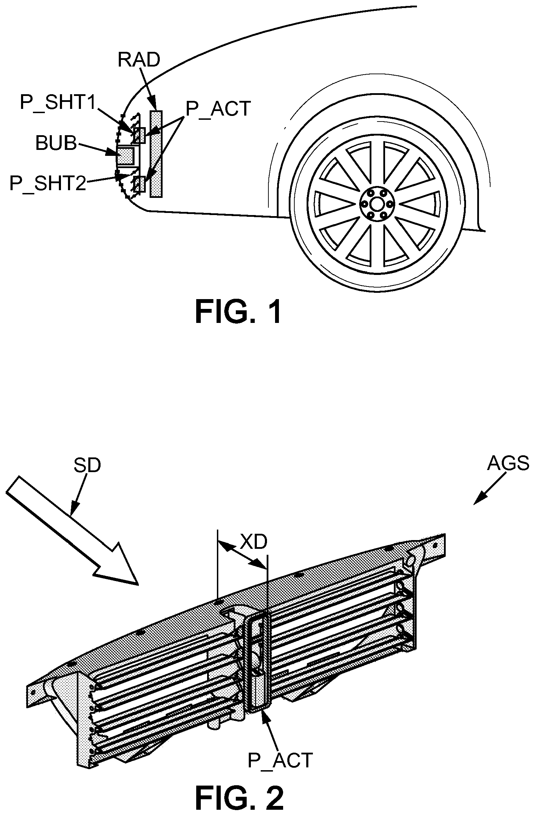

La figure 1 illustre, sous la forme d'une coupe longitudinale, une portion de structure de face avant de véhicule comprenant un dispositif AGS de contrôle d'entrée d'air situé devant un radiateur RAD. Un dispositif AGS de contrôle, ou d'obturation, d'entrée d'air d'une face avant pour véhicule automobile comprend un ensemble comprenant un cadre support définissant l'entrée d'air et un ensemble de volets aptes à obturer ladite entrée d'air. Le dispositif AGS est muni d'un actionneur P_ACT ici comprenant deux sous éléments (qui peuvent être deux actionneurs autonomes, formant ensemble l'actionneur du dispositif AGS). Une poutre pare-chocs ("bumper beam" en anglais) BUB est placée dans un plan horizontal du véhicule automobile, perpendiculairement à un axe longitudinal du véhicule. Un premier sous élément est situé au dessus de la poutre pare-chocs BUB et pilote une série de volets P_SHT1 située au dessus de ladite poutre. Un deuxième sous élément de l'actionneur P_ACT est situé au dessous de la poutre pare-chocs BUB et pilote une série de volets P_SHT2 située au dessous de ladite poutre. Les éléments de l'actionneur P_ACT se situent au niveau (à proximité immédiate) des volets qu'ils pilotent. Ces éléments de l'actionneur P_ACT, qui se trouvent sur un chemin critique, risquent d'être endommagés en cas d'accident. Par ailleurs, en cas d'accident impliquant un piéton, ces éléments, qui sont denses, risquent de blesser le piéton.

La figure 2 est une représentation tridimensionnelle d'un dispositif AGS dans lequel l'actionneur P_ACT, monobloc, est placé de façon centrale entre deux séries de volets P_SHT1 et P_SHT2. La flèche SD indique la direction d'un choc d'un véhicule automobile (non représenté), muni du dispositif AGS, avec un obstacle. Cette direction reflète la direction du vecteur vitesse de l'obstacle dans le référentiel du dispositif AGS du véhicule automobile au moment de l'impact de l'obstacle sur le véhicule automobile. La dimension selon un axe X de l'actionneur P_ACT est représentée par la référence XD.

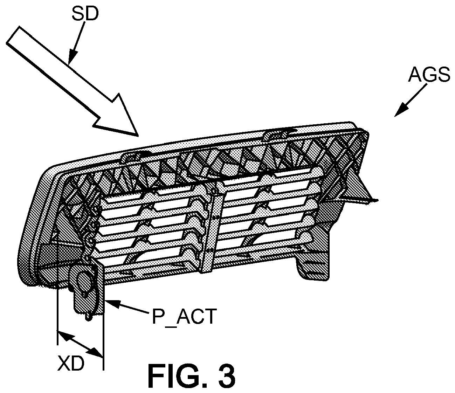

La figure 3 représente, également de façon tridimensionnelle, une variante du dispositif AGS de la figure 2, dans laquelle l'actionneur P_ACT est placé de façon latérale sur le cadre support du dispositif AGS. Comme dans le dispositif AGS de la figure 2, l'actionneur P_ACT se situe très en avant du module de face avant du véhicule, et n'est pas protégé. Il est susceptible d'être endommagé et d'occasionner des blessures.

L'invention se rapporte à un dispositif AGS de contrôle d'entrée d'air d'un module de face avant pour véhicule automobile.

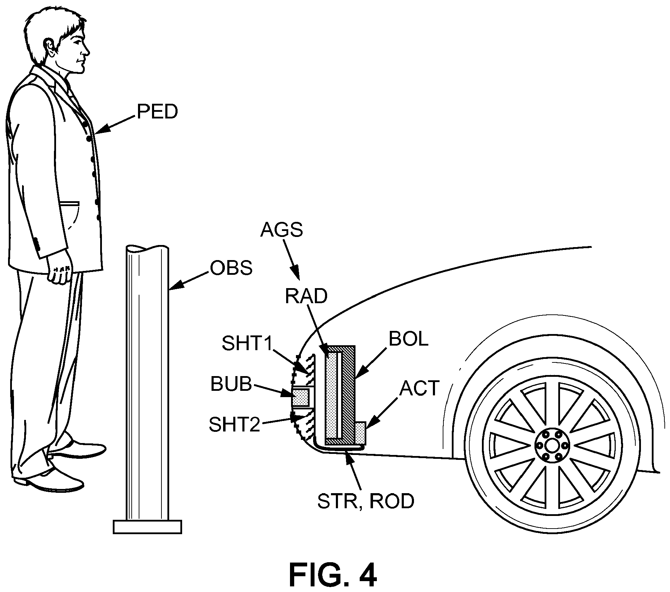

La figure 4 représente, sous la forme d'une coupe longitudinale, un mode de réalisation de l'invention. Le dispositif AGS de contrôle d'entrée d'air d'un module de face avant pour véhicule automobile comprend un ensemble de volets (également appelés "shutters") aptes à obturer l'entrée d'air. Il comprend par exemple une première série de volets SHT1, et une deuxième série de volets SHT2. Selon une mise en oeuvre possible, tous les volets de la première série SHT1 sont connectés les uns aux autres, par exemple par l'intermédiaire d'une bielle, de sorte qu'ils sont tous déplacés simultanément. Selon une mise en oeuvre possible, tous les volets de la deuxième série SHT2 sont connectés les uns aux autres, de sorte qu'ils sont tous déplacés simultanément. Selon une mise en oeuvre possible, tous les volets de la première SHT1 et de la deuxième série SHT2 sont connectés les uns aux autres, de sorte qu'ils sont tous déplacés simultanément (les volets des deux séries de volets sont déplacés simultanément).

Le dispositif AGS comprend un actionneur ACT, par exemple électrique, agencé pour piloter les volets. L'actionneur ACT comprend par exemple un servomoteur, ou un ensemble de servomoteurs. L'actionneur ACT peut être relié à un ordinateur, qui reçoit des informations de divers capteurs (capteur de température du moteur, capteur de température extérieure, capteur de vitesse du véhicule, etc.) et en fonction des informations recueillies ordonne la fermeture ou l'ouverture des volets via le/les servomoteur(s). Le dispositif AGS peut également comprendre plusieurs actionneurs ACT. Alternativement, l'actionneur ACT peut comprendre des sous éléments jouant chacun le rôle d'un actionneur autonome.

Selon le mode de réalisation illustré à la figure 4, le module de face avant comprend en outre une poutre pare-chocs BUB placée dans un plan horizontal du véhicule automobile et perpendiculairement à un axe longitudinal du véhicule. L'actionneur ACT du dispositif AGS est fixé ici à un support BOL (de l'anglais bolster) d'un radiateur RAD. L'actionneur ACT se situe ainsi en dehors du chemin critique, et présente peu de risque d'être endommagé et d'occasionner des blessures étant donné qu'il est protégé par le support BOL du radiateur RAD ainsi que par le radiateur RAD lui-même. L'actionneur ACT, déporté, pilote une première série de volets SHT1 (correspondant à la voie haute du dispositif AGS) et une deuxième série de volets SHT2 (correspondant à la voie basse du dispositif AGS).

Le dispositif AGS comprend une liaison flexible reliant l'actionneur ACT électrique aux volets. Le fait que la liaison soit une liaison flexible, au lieu d'une liaison basée sur l'intégration de l'actionneur ACT à proximité immédiate des volets (par exemple *via* un levier sortant de l'actionneur et commandant directement les volets) permet de déporter l'actionneur ACT. Ceci évite, lors d'un choc du véhicule automobile avec une entité (telle qu'un piéton PED, ou un obstacle OBS tel qu'un poteau), que l'actionneur ACT endommage (directement ou indirectement) l'obstacle OBS ou le piéton PED, et réciproquement. Cela peut même éviter tout contact entre l'actionneur ACT et l'entité OBS, PED entrée en collision avec le véhicule. On réduit ainsi les risques de blessures graves au piéton PED ou les dommages causés à l'actionneur ACT par l'obstacle OBS (voire sa destruction).

Selon le mode de réalisation illustré à la figure 4, la liaison flexible du dispositif AGS de contrôle d'entrée d'air comprend un câble STR, par exemple de type corde à piano. Elle peut également comprendre plusieurs câbles, pilotant chacun un ensemble distinct de volets.

Selon un autre mode de réalisation, la liaison flexible du dispositif AGS de contrôle d'entrée d'air comprend une (voire plusieurs) tringle(s) ROD. Selon certaines mises en oeuvre, l'actionneur comprend plusieurs servomoteurs, chacun pouvant être relié à une partie des volets *via* une liaison flexible qui lui est propre. Il est possible de préférer un câble STR pour certains volets et une tringle ROD pour d'autres, notamment en fonction de l'encombrement du module de face avant.

Un autre mode de réalisation se rapporte à un module de face avant pour véhicule automobile, comprenant un élément de protection. Par "protection", on entend que l'élément considéré n'est pas affecté par une collision légère impliquant le véhicule automobile tel un choc de type parking. L'élément de protection peut comprendre des éléments de nature à absorber les chocs mécaniques. L'élément de protection peut également présenter une résistance mécanique importante, supérieure par exemple à celle d'une carrosserie conventionnelle ou à celle des volets d'un AGS (qui sont typiquement faits de plastique assez fragile). Une carrosserie conventionnelle peut être aisément enfoncée ou froissée lors d'un choc mécanique, amortissant ainsi un tel choc. L'élément de protection peut présenter une résistance mécanique comparable à celle de l'actionneur lui-même. Selon une mise en oeuvre possible, l'élément de protection est plus résistant aux chocs mécaniques que ne l'est l'actionneur. L'élément de protection peut être notamment un élément structurel du module de face avant, ou un élément fixé dans le module, ou la structure, de la face avant.

Le module de face avant comprend en outre un dispositif AGS de contrôle d'entrée d'air selon l'un des modes de réalisation précédents avec l'actionneur ACT du dispositif de contrôle d'entrée d'air étant fixé sur l'élément de protection.

L'élément de protection se situe entre l'actionneur électrique ACT et tout point de choc possible. Ainsi, en cas de choc même assez violent avec un obstacle OBS, l'élément de protection isole l'actionneur ACT de l'obstacle OBS, qui pourrait sinon l'endommager. Dans le cas d'un choc avec un piéton PED, le piéton PED ne risque plus d'être blessé par l'actionneur ACT. Lorsque l'élément de protection se situe suffisamment en retrait par rapport à l'avant du véhicule, le choc d'un obstacle contre le véhicule peut être amorti par des éléments plus fragiles que l'élément de protection ou du moins situés en amont sur le chemin critique.

On comprend ainsi que l'actionneur ACT est soit éloigné de la zone de choc, soit placé derrière un élément de protection rigide de manière à ce qu'il ne soit plus susceptible d'être endommagé ou d'occasionner des blessures.

Selon un mode de réalisation non illustré, l'élément de protection est une poutre pare-chocs BUB (également appelée "bumper beam" par référence à la terminologie anglaise). Une telle poutre pare-chocs BUB présente une résistance mécanique importante et résistera mieux aux chocs avec un obstacle OBS. L'actionneur ACT étant fixé, dans ce mode de réalisation, sur la poutre pare-chocs BUB, il est ainsi protégé des chocs.

Un autre mode de réalisation se rapporte à un module de face avant pour véhicule automobile selon le mode de réalisation précédent, dans laquelle, la poutre pare-chocs BUB est placée dans un plan horizontal du véhicule automobile, perpendiculairement à un axe longitudinal du véhicule, avec une première série de volets SHT1 se situant au dessus de la poutre pare-chocs BUB et une deuxième série de volets SHT2 se situant en dessous de la poutre pare-chocs BUB. La première série de volets constitue ainsi une voie haute et la deuxième série SHT2 constitue une voie basse. La voie basse est souvent de plus grande taille que la voie haute. Mais dans certaines mises en oeuvre une configuration inverse peut être choisie, et dans d'autres mises en oeuvres les deux voies sont de tailles identiques ou proches (leurs formes pouvant néanmoins être différentes). La taille désigne la surface de l'entrée d'air que définissent les volets concernés.

L'actionneur ACT, par exemple électrique, est agencé pour piloter indépendamment les deux séries de volets SHT1, SHT2. Ainsi, une voie peut être consacrée par exemple au refroidissement d'un radiateur de turbo (dans le cas d'un véhicule automobile doté d'un moteur turbocompressé), alors que l'autre peut être consacrée par exemple au refroidissement d'un radiateur d'huile. Il est possible de prévoir plus de deux voies. Chaque voie peut être commandée en fonction de paramètres qui lui sont propres (par exemple: température du turbocompresseur, température du radiateur d'huile, etc.) et éventuellement de paramètres communs (vitesse du véhicule par exemple).

Un autre mode de réalisation se rapporte à un module de face avant pour véhicule automobile selon le mode de réalisation illustré à la figure 4.

Le module de face avant comprend un support BOL de radiateur, et un radiateur RAD supporté par ledit support BOL de radiateur. Ce support BOL de radiateur constitue un élément de protection. Un obstacle entrant en collision avec le véhicule devrait traverser au moins le radiateur RAD et son support BOL avant de pouvoir endommager l'actionneur électrique ACT, qui est fixé à ce support BOL.

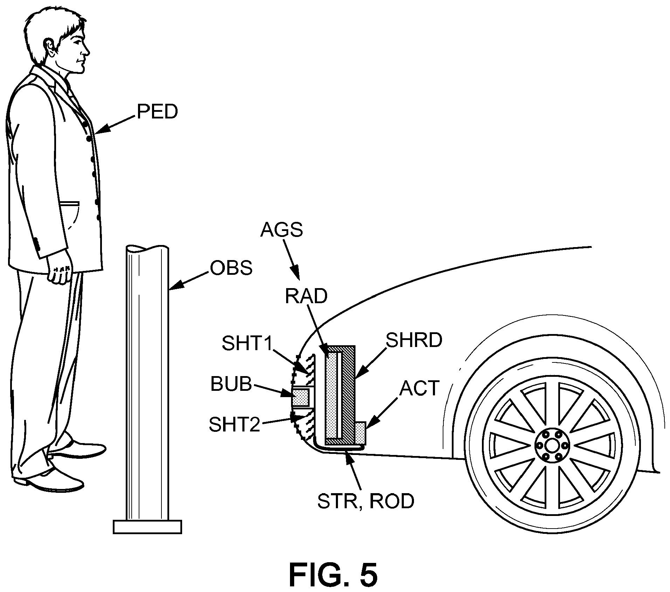

Un autre mode de réalisation illustré à la figure 5, se rapporte à un module de face avant pour véhicule automobile, comprenant un radiateur ainsi qu'un système de ventilateur (communément appelé fan system de l'anglais).

Ledit système de ventilateur comprend une coiffe (en anglais, "shroud") SHRD, correspondant à un élément de support, portant une ou plusieurs hélices ou ventilateurs (non illustrées), fixé derrière le radiateur RAD afin de canaliser l'air ayant traversé le radiateur RAD vers le compartiment moteur. Le terme "derrière" signifie en aval par rapport à l'écoulement de l'air, ou en d'autres termes, que le radiateur RAD se situe entre la coiffe SHRD et les séries de volets SHT1, SHT2 du dispositif AGS.

La présence de la coiffe SHRD évite que l'air aspiré par des ventilateurs puisse comprendre de l'air autre que celui qui a traversé le radiateur RAD. Les ventilateurs visent en effet essentiellement à refroidir le radiateur RAD. L'actionneur ACT est fixé à l'intérieur, ou sur, la coiffe SHRD, la coiffe SHRD peut ainsi correspondre à l'élément de protection. Le fonctionnement d'un actionneur électrique est en général garanti dans une plage de températures de -40°C à 85°C, et il peut donc fonctionner au sein de la coiffe.

D'autres emplacements sont envisageables pour l'actionneur ACT. Il suffit que l'emplacement retenu pour fixer l'actionneur ACT respecte la plage de températures de fonctionnement de l'actionneur ACT, qu'il maintienne l'actionneur ACT à l'abri grâce à un élément de protection, et qu'il assure une accessibilité suffisante aux volets du dispositif AGS d'entrée d'air, via une ou plusieurs tringle(s), un ou plusieurs câble(s) ou toute(s) autre(s) liaison(s) flexible(s) adaptée(s). Bien entendu, l'actionneur ACT peut comprendre des sous éléments, pouvant chacun constituer, le cas échéant, des actionneurs autonomes. Ces différents actionneurs ACT peuvent alors être fixés chacun à des emplacements distincts.

## Revendications

1. Module de face avant pour véhicule automobile, comprenant:
un élément de protection (BUB, BOL, SHRD),
un dispositif (AGS) de contrôle d'entrée d'air comprenant:
- des volets (SHT1, SHT2),
- un actionneur (ACT) agencé pour piloter les volets (SHT1, SHT2), et
- une liaison flexible (STR, ROD) reliant l'actionneur (ACT) aux volets (SHT1, SHT2) apte à déporter l'actionneur (ACT) afin d'éviter, lors d'un choc du véhicule automobile avec une entité (PED, OBS), que l'actionneur (ACT) ne cause un dommage à ladite entité (PED, OBS),
dans lequel l'actionneur (ACT) est fixé sur l'élément de protection (BUB, BOL, SHRD),
**caractérisé en ce que** ledit module comprend un support (BOL) de radiateur et un radiateur (RAD), ledit support (BOL) de radiateur constituant ledit élément de protection.

2. Module de face avant pour véhicule automobile selon la revendication 1, dans lequel la liaison flexible comprend un câble (STR).

3. Module de face avant pour véhicule automobile selon l'une des revendications précédentes, dans lequel la liaison flexible comprend une tringle (ROD).

## Patentansprüche

1. Frontend-Modul für ein Kraftfahrzeug, das enthält:
ein Schutzelement (BUB, BOL, SHRD),
eine Lufteintritt-Steuervorrichtung (AGS), die enthält:
- Klappen (SHT1, SHT2),
- einen Stellantrieb (ACT), der eingerichtet ist, um die Klappen (SHT1, SHT2) zu lenken, und
- eine den Stellantrieb (ACT) mit den Klappen (SHT1, SHT2) verbindenden elastische Verbindung (STR, ROD), die den Stellantrieb (ACT) verlagern kann, um zu verhindern, dass der Stellantrieb (ACT) bei einem Zusammenstoß des Kraftfahrzeugs mit einer Einheit (PED, OBS) einen Schaden der Einheit (PED, OBS) verursacht,
wobei der Stellantrieb (ACT) am Schutzelement (BUB, BOL, SHRD) befestigt ist,
**dadurch gekennzeichnet, dass** das Modul einen Kühlerhalter (BOL) und einen Kühler (RAD) enthält,
wobei der Kühlerhalter (BOL) das Schutzelement bildet.

2. Frontend-Modul für ein Kraftfahrzeug nach Anspruch 1, wobei die elastische Verbindung ein Seil (STR) enthält.

3. Frontend-Modul für ein Kraftfahrzeug nach einem der vorhergehenden Ansprüche, wobei die elastische Verbindung eine Stange (ROD) enthält.

## Claims

1. Front end module for a motor vehicle comprising:
- a protection element (BUB, BOL, SHRD),
- an air intake control device (AGS) comprising:
- shutters (SHT1, SHT2),
- an actuator (ACT) arranged so as to control the shutters (SHT1, SHT2), and
- a flexible connection (STR, ROD) connecting the actuator (ACT) to the shutters (SHT1, SHT2) and able to displace the actuator (ACT) in order to prevent the actuator (ACT) from causing damage to an entity (PED, OBS) in the event of a collision between the motor vehicle and said entity (PED, OBS),
- wherein the actuator (ACT) is fixed to the protection element (BUB, BOL, SHRD),
**characterized in that** said module comprises a radiator support (BOL) and a radiator (RAD), said radiator support (BOL) constituting said protection element.

2. Front end module for a motor vehicle according to Claim 1, wherein the flexible connection comprises a cable (STR).

3. Front end module for a motor vehicle according to either of the preceding claims, wherein the flexible connection comprises a linkage (ROD).
